# EUROPEAN PATENT APPLICATION

(11) **EP 1 039 275 A1**
(43) Date of publication of application: **27.09.2000**
(21) Application number: 00301830.6
(22) Date of filing: 06.03.2000
(51) Int. Cl.: G01G 19/414, G09F 23/00, G07G 1/00, A47F 9/04, G01G 21/22

(54) **Retail terminal having a product scale which has an overlay member secured thereto**

(30) Priority: 23.03.1999 US 274409
(71) Applicant: NRC International Inc., Dayton, Ohio 45479 (US)
(72) Inventor: Walter, Joanne Synowsky, Alpharetta, Georgia 30022 (US); Morrison, James, Suwanee, Georgia 30024 (US); Lin, Horng-Jaan, Lawrenceville, Georgia 30043 (US)
(74) Representative: Williamson, Brian

(57) **Abstract**

A self-service checkout terminal includes a scale assembly having an upper plate which defines an upper surface. Moreover, the self-service checkout terminal includes an overlay member secured to the upper plate of the scale assembly so as to cover a portion of the upper surface. The overlay member has an instructional message disposed thereon which instructs a customer to place a first item for purchase on the overlay member so as to determine weight of the first item for purchase with the scale assembly. Moreover, the overlay member also has an advertisement message disposed thereon which advertises a product to the customer during operation of the self-service checkout terminal by the customer.

## Description

The present invention relates generally to a retail checkout terminal, and more particularly to a retail terminal having a product scale which has an overlay member secured thereto.

In the retail industry, the largest expenditures are typically the cost of the goods sold followed closely by the cost of labor expended. With particular regard to the retail grocery or supermarket industry, the impetus to reduce labor costs has focused on reducing or eliminating the amount of time required to handle and/or process the items or goods to be purchased by a customer. To this end, there have been a number of retail checkout terminal concepts developed which attempt to reduce the amount of time required by a retail clerk to checkout a customer's items for purchase. For example, assisted retail terminals (i.e. retail checkout terminals which are operated by a retail clerk) have heretofore been designed which include integrated scanner and product scale assemblies which eliminate the need for the retail clerk to carry produce or the like to a centralized weighing station in order to obtain the weight of the produce during a checkout procedure.

Moreover, there have been a number of self-service checkout terminal concepts developed which attempt to substantially eliminate the need for the retail clerk. In particular, a self-service checkout terminal is a system which is operated by a customer without the aid of the retail clerk. What is meant herein by the term "customer" is a person who enters the retailer's store, selects his or her items for purchase from the shopping area of the store, checks out his or items for purchase by use or a self-service checkout terminal, tenders payment for his or her items for purchase, and then exits the store subsequent to tendering payment. Hence, as used herein, a customer is distinguished from a retail clerk or other employee of the retailer in that a customer enters the retailer's store for the sole purpose of purchasing items from the store.

Hence, it should be appreciated that in regard to operation of a self-service checkout terminal, the customer scans individual items for purchase across a scanner or weighs items with a product scale and thereafter places the items into a grocery bag, if desired. The customer then pays for his or her purchases either at the self-service checkout terminal if so equipped, or at a central payment area which is staffed by a store employee. Thus, a self-service checkout terminal permits a customer to select, itemize, and in some cases pay for his or her purchases without the assistance of the retailer's personnel. It should be noted that similarly to the above-described assisted retail terminals (i.e. checkout terminals which are operated by a retail clerk), many self service checkout terminals which have heretofore been designed include an integrated scanner and product scale assembly which eliminates the need for the customer to carry produce or the like to a centralized weighing station in order to obtain the weight of the produce during the customer's checkout procedure.

In general, a customer may have little or no training in the operation of the self-service checkout terminal. Hence, it is generally desirable to provide the customer with a number of instructions which facilitate the customer's use of the self-service checkout terminal. For example, in the case of operation of an integrated scanner and product scale assembly, it is desirable to instruct the customer in regard of the location at which a produce item or the like should be positioned in order to weigh the produce item with the product scale of the integrated scanner and product scale assembly. It should be appreciated that such instruction would also be beneficial to a retail clerk in the case of an assisted retail terminal.

What is needed therefore is a retail checkout terminal which overcomes one or more of the above-mentioned drawbacks. What is particularly needed is a retail checkout terminal which provides instruction to a customer in order to facilitates the customer's operation of the retail checkout terminal.

In accordance with a first embodiment of the present invention, there is provided a retail terminal. The retail terminal includes a scale assembly having an upper member which defines an upper surface. The retail terminal also includes an overlay member supported above the upper member of the scale assembly so as to cover a portion of the upper surface. The overlay member has a first message disposed thereon.

In accordance with a second embodiment of the present invention, there is provided a retail terminal. The retail terminal includes a scale assembly having an upper plate which defines an upper surface. The retail terminal also includes an overlay member secured to the upper plate of the scale assembly so as to cover a portion of the upper surface. The overlay member has an instructional message disposed thereon which instructs a user of the retail terminal to place a first item for purchase on the overlay member so as to determine weight of the first item for purchase with the scale assembly.

In accordance with a third embodiment of the present invention, there is provided a self-service checkout terminal. The self-service checkout terminal includes a scale assembly having an upper plate which defines an upper surface. Moreover, the self-service checkout terminal includes an overlay member secured to the upper plate of the scale assembly so as to cover a portion of the upper surface. The overlay member has an instructional message disposed thereon which instructs a customer to place a first item for purchase on the overlay member so as to determine weight of the first item for purchase with the scale assembly. Moreover, the overlay member also has an advertisement message disposed thereon which advertises a product to the customer during operation of the self-service checkout terminal by the customer.

It is moreover an object of the present invention to provide an improved retail checkout terminal.

According to an aspect of the present invention there is provided a retail terminal, comprising:
a scale assembly having an upper member which defines an upper surface; and
an overlay member supported above said upper member of said scale assembly so as to cover a portion of said upper surface,
   wherein said overlay member has a first message disposed thereon

According to another aspect of the present invention there is provided a method of operation of a retail terminal as described above;
the method comprising the steps of providing a first message regarding use of the terminal, and
providing a second message to the user, including a product advertising message, during use of the terminal by the user.

Embodiments of the present invention will now be described by way of example, with reference to the accompanying drawings in which:-
FIG. 1 is a perspective view of a self-service checkout terminal which incorporates the features of the present invention therein;
FIG. 2 is an enlarged perspective view of the integrated scanner and product scale assembly and the overlay member of the self-service checkout terminal of FIG. 1, note that the scanner and product scale assembly has been removed from the self-service checkout terminal for clarity of description;
FIG. 3 is a view similar to FIG. 2, but showing the overlay member with an advertising message disposed thereon; and
FIG. 4 is an exploded perspective view of the integrated scanner and product scale assembly and the overlay member of FIG. 2.

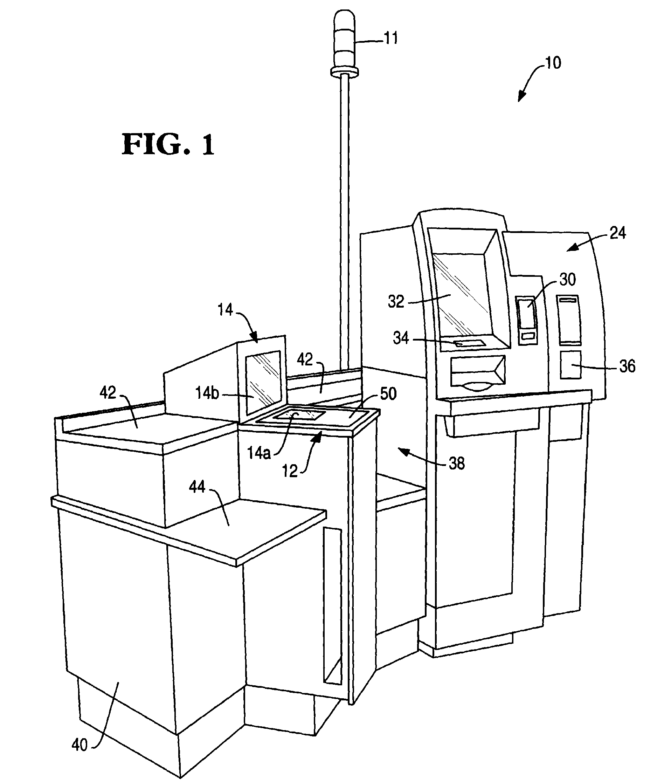

Referring now to FIGS. 1-4, there is shown a retail checkout terminal such as a self-service checkout terminal 10 for use in a retail business such as a grocery store. For purposes of the following discussion, the self-service checkout terminal 10 will be described in detail; however, it should be appreciated that an assisted checkout terminal (i.e. a retail checkout terminal which is operated by a retail clerk) may be configured in a similar manner. The self-service checkout terminal 10 includes a status light device 11, a product scale assembly 12, a scanner device 14, a card reader 30, a display monitor 32, a keypad 34, and a printer 36. The card reader 30, the display monitor 32, the keypad 34, and the printer 36 may be provided as separate components, or alternatively, may preferably be provided as components of an automated teller machine (ATM) 24.

The self-service checkout terminal 10 also includes a bagwell 38 for accommodating one or more grocery bags (not shown), a base 40 having a counter 42 secured thereto, and a basket shelf 44. The counter 42 defines an arcuate surface as shown in FIG. 1. Such an arcuate surface allows the scanner device 14 and the product scale 12 to be positioned relatively close or otherwise proximate the ATM 24 and hence the components associated therewith. Such a configuration facilitates a customer's use of the self-service checkout terminal 10. Moreover, the bagwell 38 is configured to allow two or more grocery bags to be accessed by the customer at any given time thereby allowing a customer to selectively load various item types into the grocery bags. For example, the customer may desire to use a first grocery bag for household chemical items such as soap or bleach, and a second grocery bag for edible items such as meat and produce.

The display monitor 32 displays instructions which serve to guide a customer through a checkout procedure. For example, an instruction is displayed on the display monitor 32 which instructs the customer to enter an item into the self-service checkout terminal 10 by either passing the item over the scanner device 14, or placing the item on the product scale 12 in order to obtain the weight of the item. The display monitor 32 is preferably a known touch screen monitor which can generate data signals when certain areas of the screen are touched by a customer.

The status light device 11 is provided in order to notify store personnel, such as a customer service manager, that intervention into the customer's transaction is needed. In particular, the status light device 11 may display a first colored light in order to notify store personnel that intervention is needed prior to the end of the customer's transaction. Alternatively, the status light device 11 may display a second colored light in order to notify store personnel that intervention is needed immediately.

The card reader 30 is provided to facilitate tendering of payment for a customer's items for purchase and may include a known credit, debit, loyalty, and/or smart card reader which is capable of reading information stored on the customer's credit, debit, loyalty, and/or smart card. The keypad 34 may be utilized by the customer to manually enter any information necessary to complete the customer's transaction and may include a known keypad or touchpad. Moreover, the printer 36 is provided to print a receipt or the like at the end of a customer's transaction. The printer 36 may also be utilized to print coupons or vouchers if so desired by a given retailer.

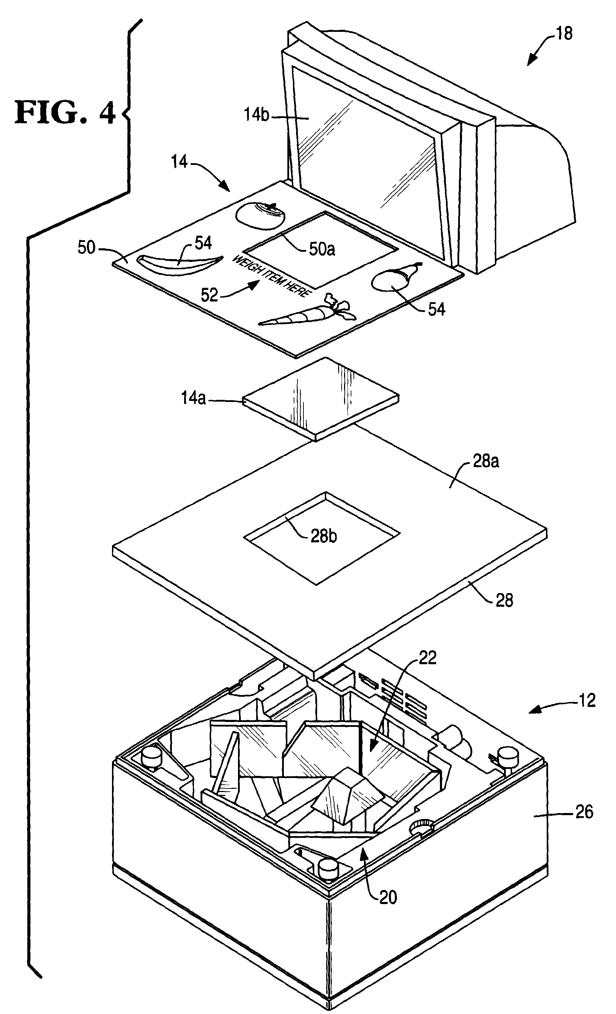

The product scale 12 conventionally determines the weight of items such as produce items which are placed on an upper member or plate 28 of the scale 12. In particular, the product scale 12 includes a scale hardware assembly 22 (see FIG. 4) which is housed in a housing 26. The scale hardware assembly 22 includes a controller (not shown) and a load cell assembly (not shown) which are utilized to determine the weight of an item placed on the upper plate 28 in a known manner. More specifically, when an item is placed on an upper surface 28a of the upper plate 28, the load cell associated with the product scale 12 is deflected by a predetermined amount thereby allowing the weight of the item to be determined in a known manner.

The scanner device 14 conventionally scans or reads a product identification code such as a Universal Product Code (UPC), industrial symbol(s), alphanumeric character(s), or other indicia associated with an item to be purchased. The scanner device 14 includes a scanner hardware assembly 20 which is commonly housed in the housing 26 with the scale hardware assembly 22. The scanner hardware assembly 20 includes a light source (not shown) such as a laser, a rotating mirror (not shown) driven by a motor (not shown), and a mirror array (not shown). In operation, a laser beam reflects off the rotating mirror and mirror array to produce a pattern of scanning light beams. As the product identification code on an item is passed over the scanner device 14, the scanning light beams scatter off the code and are returned to the scanner device 14 where they are collected and detected. The reflected light is then analyzed electronically in order to determine whether the reflected light contains a valid product identification code pattern. If a valid code pattern is present, the product identification code may then be utilized to retrieve product information associated with the item (e.g. the price of the item) in a known manner.

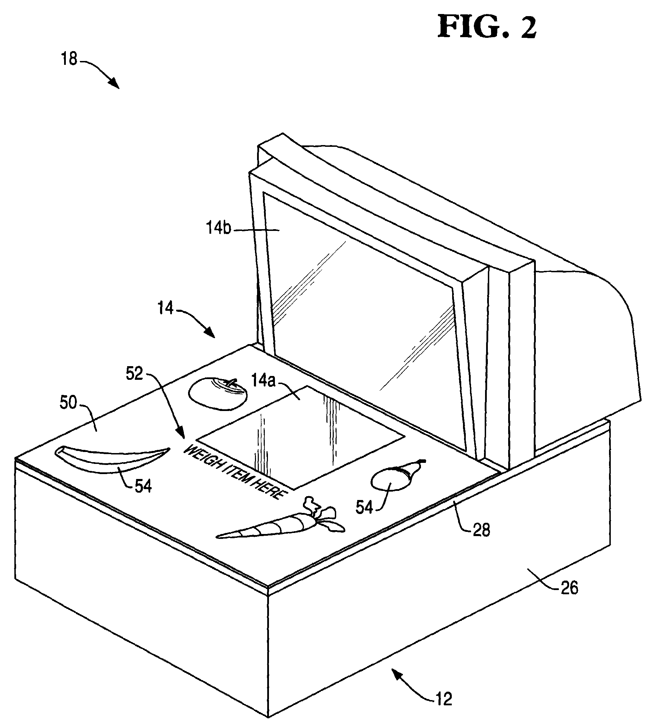

The scanner device 14 also includes a first scanning window 14a and a second scanning window 14b. The first scanning window 14a is disposed in a substantially horizontal orientation, whereas the second scanning window 14b is disposed in a substantially vertical orientation, as shown in FIGS. 2-3. The product scale 12 and the scanner device 14 collectively define an integrated scanner and product scale assembly 18. In particular, the upper plate 28 of the product scale 12 is disposed substantially parallel to the scanning window 14a thereby enveloping the scanning window 14a. More specifically, the upper plate 28 has an access opening 28b defined therein. The scanning window 14a is disposed so as to be positioned within the access opening 28b. Hence, if an item such as produce is placed upon the upper plate 28 of the product scale 12 or the first scanning window 14a, the product scale 12 may be utilized to determine the weight of the item.

An overlay member 50 is secured to the upper plate 28 of the product scale 12 thereby covering a portion of the upper surface 28a thereof. Preferably the overlay member 50 covers substantially all of the surface area of the upper surface 28a of the upper plate 28. Hence, when an item such as a produce item is positioned on the overlay member 50, the weight of the item may be determined by the product scale 12. The overlay member 50 is preferably constructed out of a durable material such as, for example, a film of vinyl or other plastic. Suitable vinyl films for use as the overlay member 50 of the present invention are commercially available from Catalina Plastics & Coating Corporation of Calabasas Hills, California

The overlay member 50 has an access opening 50a defined therein. The access opening 50a aligns with the access opening 28b defined in the upper plate 28 of the product scale 12 when the overlay member 50 is secured to the upper plate 28. Hence, as shown in FIGS. 2-3, the scanning window 14a is positioned within both the access openings 28b, 50a when the overlay member 50 is secured to the upper plate 28 of the product scale 12.

The overlay member 50 has a number of messages printed or otherwise disposed thereon. For example, the overlay member 50 may have an instructional message 52 printed thereon. The instructional message 52 instructs the user (i.e. the customer in the case of the self-service checkout terminal 10) to place an item such as a produce item onto the overlay member 50 in order to determine the weight of the item with the product scale 12. For example, the instructional message 52 may include the phrase "WEIGH ITEM HERE" in order to instruct the customer as to where to position an item such as a produce item on the overlay member 50 in order to determine the weight of the produce item with the product scale 12.

As shown in FIG. 2, the overlay member 50 may also have a number of pictures or graphics 54 printed thereon which supplement the instructional message 52. For example, the pictures 54 may include a number of pictures of fruits and vegetables which are utilized to graphically supplement the instructional message 52.

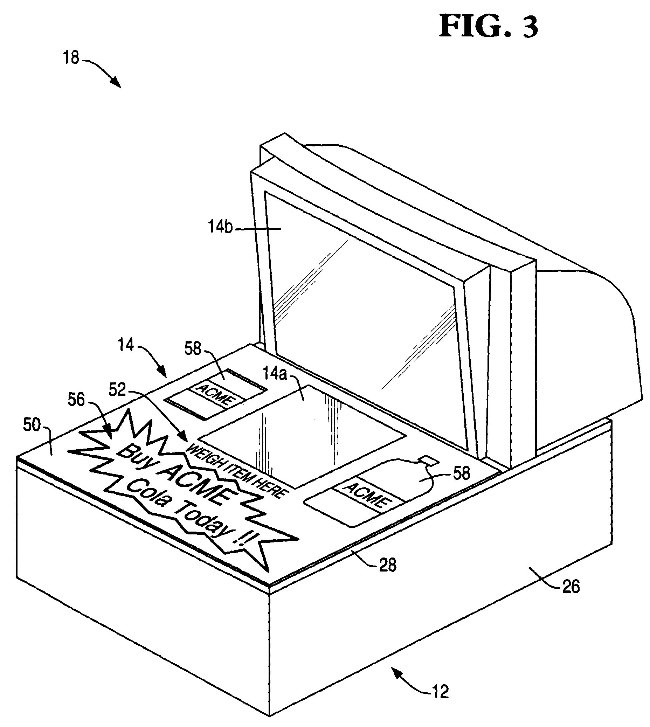

As shown in FIG. 3, the overlay member 50 may also include an advertisement message 56 and associated pictures and graphics 58. The advertisement message 56 is provided to advertise or otherwise communicate to the user (i.e. the customer in the case of the self-service checkout terminal 10) a product (i.e. an item or service). In particular, the advertisement message 56 may include advertisements or promotions for items sold by the retailer, services offered by the retailer, periodic sales or discounts, or even products (i.e. items or services) offered by companies or organizations other than the retailer. For example, the advertisement message 56 may include an advertisement for a particular brand of taco sauce, a new movie release being offered in the retailer's video department, a "2 for the price of 1" sale on bottles of soda, or an advertisement for a local real estate agent or mortgage company. In the case of advertisements for products or services offered by companies or organizations other than the retailer (e.g. the local real estate agent or mortgage company), the retailer may collect a fee for displaying the advertisements on the product overlay 50.

It should be appreciated that use of the advertisement message 56 printed on the overlay member 50 is a relatively effective form of advertising since the customer's attention is generally focused on the integrated scanner and product scale assembly 18 during operation of the self-service checkout terminal 10. In particular, the customer typically must look in the general direction of the overlay member 50 during entry of items into the self-service checkout terminal by use of either the scanner device 14 or the product scale 12. Hence, a number of "impulse-type" sales may be achieved by providing the advertisement message 56 on the overlay member 50.

Hence, as described above, the self-service checkout terminal 10 provides numerous advantages over retail terminals which have heretofore been designed. For example, use of the overlay member 50 with the instructional message disposed thereon advantageously provides instruction to a user (i.e. the customer in the case of the self-service checkout terminal 10) thereby facilitating use of the product scale 12. Moreover, use of the overlay member 50 with the advertisement message 56 disposed thereon advantageously allows a retailer to advertise a product (i.e. an item or service) to the customer during the customer's operation of the self-service checkout terminal 10 thereby potentially causing the customer to purchase a product which he or she might not otherwise have purchased.

While the invention has been illustrated and described in detail in the drawings and foregoing description, such an illustration and description is to be considered as exemplary and not restrictive in character, it being understood that only the preferred embodiments have been shown and described and that all changes and modifications that come within the scope of the invention are desired to be protected.

For example, certain features associated with the overlay member 50 may be integrated into the upper plate 28 of the product scale 12. For instance, the instructional message 52 and/or the advertisement message 56 may be engraved or otherwise etched into the upper surface 28a of the upper plate 28.

## Claims

1. A retail terminal, comprising:
a scale assembly having an upper member which defines an upper surface; and
an overlay member supported above said upper member of said scale assembly so as to cover a portion of said upper surface,
wherein said overlay member has a first message disposed thereon.

2. A retail terminal as claimed in claim 1, wherein:
said first message includes an instructional message which instructs a user of said retail terminal to place an item for purchase on said overlay member so as to determine weight of said item for purchase with said scale assembly.

3. A retail terminal as claimed in claim 1 or claim 2, wherein:
said overlay member further has a second message disposed thereon, and
said second message includes an advertisement message which advertises a product to a user of said retail terminal.

4. A retail terminal as claimed in any of claims 1 to 3, further comprising a scanner device for scanning product codes associated with a user's items for purchase, wherein:
said scanner device includes a first scanning window,
said upper member of said scale assembly has a first access opening defined therein,
said overlay member has a second access opening defined therein,
said second access opening aligns with said second access opening when said overlay member is supported above said upper member of said scale assembly, and
said first scanning window is disposed in a substantially horizontal orientation so as to be positioned within both said first access opening and said second access opening.

5. A retail terminal as claimed in claim 4, wherein:
said scanner device includes a second scanning window, and
said second scanning window is disposed in a substantially vertical manner so as to be substantially perpendicular to said overlay member.

6. A retail terminal as claimed in any preceding claim, wherein said overlay member is constructed of plastic.

7. A retail terminal as claimed in any of claims 1 to 5, wherein said overlay member is constructed of vinyl.

8. A retail terminal as claimed in any preceding claim, wherein said overlay member is positioned in contact with said upper member of said scale assembly.

9. A retail terminal as claimed in claim 8, wherein said overlay member is secured to said upper member of said scale assembly.

10. A method of operation of a retail terminal as claimed in any of claims 1 to 9;
the method comprising the steps of providing a first message regarding use of the terminal, and
providing a second message to the user, including a product advertising message, during use of the terminal by the user.
